# EUROPEAN PATENT APPLICATION

(11) **EP 4 659 849 A1**
(43) Date of publication of application: **10.12.2025**
(21) Application number: 24749887.6
(22) Date of filing: 11.01.2024
(51) Int. Cl.: B01D 65/00, B01D 53/22, B01D 71/02

(54) **METHOD FOR STOPPING SEPARATION DEVICE**

(30) Priority: 30.01.2023 JP 2023012235
(71) Applicant: NGK Insulators, Ltd., Nagoya-shi, Aichi 467-8530 (JP)
(72) Inventor: KOJIMA Miyuki, Nagoya-shi, Aichi 467-8530 (JP); SHIMIZU Katsuya, Nagoya-shi, Aichi 467-8530 (JP); IIDA Kazuki, Nagoya-shi, Aichi 467-8530 (JP); NAKAGAWA Kosuke, Nagoya-shi, Aichi 467-8530 (JP); MAEHARA Sota, Nagoya-shi, Aichi 467-8530 (JP); KAN Hirofumi, Nagoya-shi, Aichi 467-8530 (JP)
(74) Representative: Mewburn Ellis LLP
(86) International application number: PCT/JP2024/000370
(87) International publication number: WO 2024/161931

(57) **Abstract**

Provided is a stopping method for a separation device including a separation membrane, which enables prevention of damage on the separation membrane. The stopping method for a separation device according to an embodiment of the present invention is a stopping method for a separation device, which is to be performed after a dehydration step using a separation membrane, the separation device including the separation membrane, the stopping method including: placing the separation membrane under an environment A in which a water vapor partial pressure P(H₂O) and a saturation water vapor pressure P^{sat}(H₂O) satisfy a relationship of [P(H₂O)/P^{sat}(H₂O)≥0.001] and a temperature is 100°C or higher; and decreasing a temperature of the environment A.

## Description

### Technical Field

The present invention relates to a stopping method for a separation device.

### Background Art

There has been known a membrane separation method that uses a separation membrane to separate a specific substance from a mixture. As such a membrane separation method, a separation method using, for example, a zeolite membrane has been proposed (see Non Patent Literature 1). In a separation device including a separation membrane, the separation membrane is sometimes heated for use under pressure so that the separation membrane can fulfill a predetermined function. In such a separation device, the prevention of damage on the separation membrane, which may be caused along with a decrease in temperature when the separation device is stopped, is required.

### Citation List

### Non Patent Literature

[NPL 1] Development of Membrane Aided Reactor, Mitsui Zosen Technical Review, February 2003, No. 178, 115-120

### Summary of Invention

### Technical Problem

A primary object of the present invention is to provide a stopping method for a separation device including a separation membrane, which enables prevention of damage on the separation membrane.

### Solution to Problem

[1] According to an embodiment of the present invention, there is provided a stopping method for a separation device, which is to be performed after a dehydration step using a separation membrane, the separation device including the separation membrane, the stopping method including: placing the separation membrane under an environment A in which a water vapor partial pressure P(H₂O) and a saturation water vapor pressure P^{sat}(H₂O) satisfy a relationship of [P(H₂O)/P^{sat}(H₂O)≥0.001] and a temperature is 100°C or higher; and decreasing a temperature of the environment A.
[2] The stopping method for a separation device according to the above-mentioned item [1] may further include reducing a pressure in the environment A.
[3] The stopping method for a separation device according to the above-mentioned item [2] may further include decreasing the temperature of the environment A after the pressure is reduced.
[4] In the stopping method for a separation device according to any one of the above-mentioned items [1] to [3], the temperature may be decreased by using output adjustment performed by temperature control means.
[5] In the stopping method for a separation device according to any one of the above-mentioned items [2] to [4], the temperature of the environment A may be set approximately constant while the pressure is being reduced.
[6] In the stopping method for a separation device according to any one of the above-mentioned items [2] to [5], a pressure reduction operation may be performed in a stepwise manner.
[7] In the stopping method for a separation device according to any one of the above-mentioned items [1] to [6], a total pressure in the environment A may be set approximately constant while the temperature of the environment A is being decreased.
[8] In the stopping method for a separation device according to any one of the above-mentioned items [1] to [7], the temperature of the environment A may be less than 400°C.
[9] In the stopping method for a separation device according to any one of the above-mentioned items [1] to [8], in the environment A, the water vapor partial pressure P(H₂O) and the saturation water vapor pressure P^{sat}(H₂O) may satisfy a relationship of [1>P(H₂O)/P^{sat}(H₂O)].
[10] In the stopping method for a separation device according to any one of the above-mentioned items [2] to [9], a pressure reduction operation may be stopped at the time when a total pressure in the environment A becomes equal to atmospheric pressure+10 kPa.
[11] In the stopping method for a separation device according to any one of the above-mentioned Item items [1] to [10], the separation membrane may be a zeolite membrane.
[12] In the stopping method for a separation device according to the above-mentioned item [11], the zeolite membrane may be made of LTA-type zeolite.

### Advantageous Effects of Invention

According to the embodiment of the present invention, the stopping method for a separation device including a separation membrane, which enables the prevention of damage on the separation membrane, can be provided.

### Brief Description of Drawings

FIG. **1** is a schematic configuration view for illustrating a separation membrane complex to be used in a stopping method for a separation device according to one embodiment of the present invention.
FIG. **2** is a schematic configuration view of a separation membrane and a substrate of FIG. **1****.**
FIG. **3A** is an explanatory graph for showing the stopping method for a separation device according to one embodiment of the present invention.
FIG. **3B** is an explanatory graph for showing the stopping method for a separation device according to one embodiment of the present invention.
FIG. **4** is an explanatory graph for showing the stopping method for a separation device according to one embodiment of the present invention.
FIG. **5** is an explanatory graph for showing the stopping method for a separation device according to one embodiment of the present invention.
FIG. **6** is an explanatory graph for showing the stopping method for a separation device according to one embodiment of the present invention.
FIG. **7** is a schematic configuration view of one modification example of the separation membrane complex.
FIG. **8** is a schematic configuration view of the separation membrane complex of FIG. **7****.**
FIG. **9** is a schematic configuration view of another modification example of the separation membrane complex.
FIG. **10** is an explanatory schematic diagram for illustrating how a separation device is operated according to one embodiment of the present invention.

### Description of Embodiments

Embodiments of the present invention are described below with reference to the drawings, but the present invention is not limited to those embodiments. For clearer illustration, some widths, thicknesses, shapes, and the like of respective portions may be schematically illustrated in the drawings in comparison to the embodiments. However, the widths, the thicknesses, the shapes, and the like are merely an example, and do not limit understanding of the present invention.

### A. Stopping Method for Separation Device

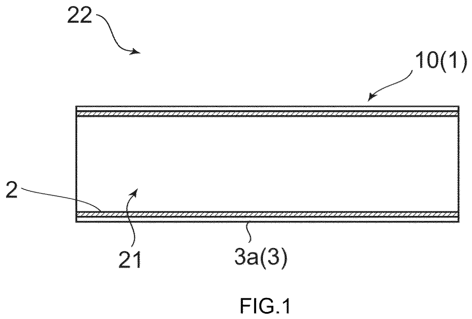

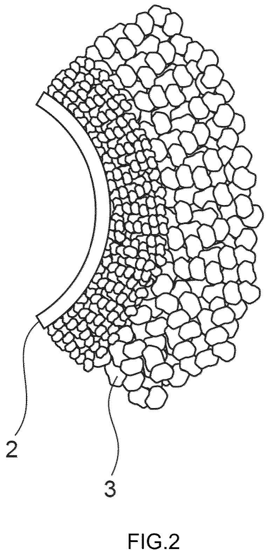

FIG. **1** is a schematic configuration view of a separation membrane complex to be used in a stopping method for a separation device according to one embodiment of the present invention, and FIG. **2** is a schematic configuration view of a separation membrane and a substrate of FIG. **1****.**

The stopping method for a separation device according to one embodiment of the present invention is a stopping method for a separation device **1** including a separation membrane **2.** In one embodiment, the separation membrane **2** forms a separation membrane complex **10.** The separation membrane complex **10** includes: the separation membrane **2;** and a substrate **3** arranged on one side of the separation membrane **2.** The separation device **1** has a first flow path **21** and a second flow path **22.** The first flow path **21** is positioned on the side closer to the separation membrane **2** of the separation membrane complex **10.** The second flow path **22** is positioned on the side closer to the substrate **3** of the separation membrane complex **10.** In one embodiment, the first flow path and the second flow path are separated from each other by the separation membrane. In one embodiment, the first flow path may be a flow path through which a mixed gas to be subjected to separation in a dehydration step is allowed to flow. In one embodiment, the second flow path may be a flow path through which a gas that has permeated through the separation membrane is allowed to flow.

The stopping method for a separation device is performed after the dehydration step using the separation membrane **2.** In the dehydration step, a water-containing fluid to be treated (for example, a water-containing gas that contains an organic compound) is supplied to the first flow path, and water is separated through the separation membrane to thereby dehydrate the water-containing fluid. The water-containing fluid may be supplied under pressure. Further, for the expression of separability of the separation membrane, the separation membrane may be heated to a predetermined temperature.

The stopping method for a separation device includes placing the separation membrane under an environment in which a water vapor partial pressure P(H₂O) is set to fall within a predetermined range, and decreasing the temperature of the environment. The stopping method for a separation device may be a method of decreasing the temperature of the separation membrane that has been heated in the dehydration step, to a predetermined temperature (for example, 100°C). The term "pressure", as used herein, such as the water vapor partial pressure P(H₂O), a saturation water vapor pressure P^{sat}(H₂O), or a total pressure may refer to a pressure in the first flow path (for example, a flow path inside the separation membrane) (for example, a pressure on the outlet side of the flow path) and, in the separation membrane complex **10** illustrated in FIG. **1****,** may refer to a pressure in the first flow path **21.**

Specifically, the environment in which the water vapor partial pressure P(H₂O) is set to fall within the predetermined range is an environment in which the water vapor partial pressure P(H₂O) and the saturation water vapor pressure P^{sat}(H₂O) satisfy a relationship of [P(H₂O)/P^{sat}(H₂O)≥0.001] and its temperature is 100°C or higher. Herein, for convenience, such an environment is referred to as "environment A". The environment A may be the inside (for example, the outlet) of the first flow path.

The temperature of the environment A is preferably less than 400°C, more preferably 200°C or less. When the temperature falls within the above-mentioned ranges, damage on the separation membrane (for example, damage due to dissolution of the separation membrane) can be prevented.

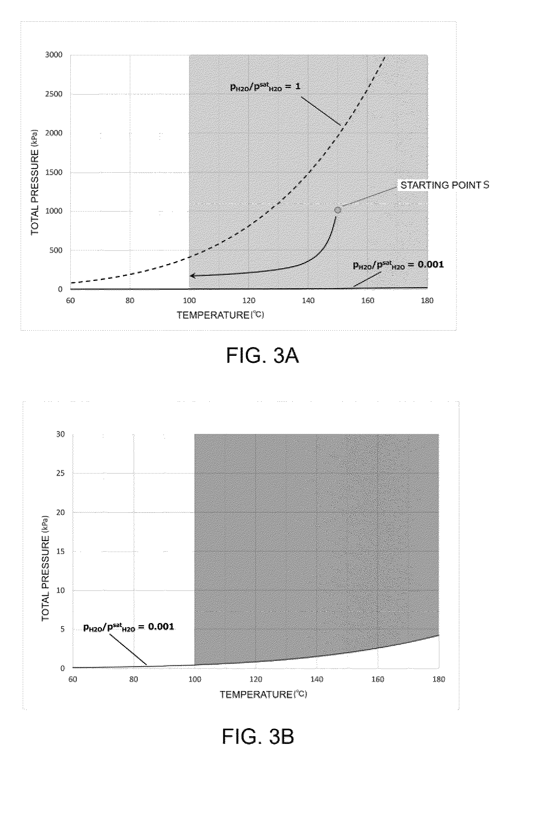

FIG. **3A** and FIG. **3B** are explanatory graphs for showing the stopping method for a separation device according to one embodiment of the present invention. In FIG. **3A** and FIG. **3B****,** the vertical axis represents a total pressure in an environment in which the separation membrane is placed, and the horizontal axis represents temperature. FIG. **3B** is an enlarged view of FIG. **3A** for a range of from 0 kPa to 30 kPa on the vertical axis for better visibility of the line representing P(H₂O/P^{sat}(H₂O)=0.001. In FIG. **3A** and FIG. **3B****,** the area satisfying the conditions for the environment A is darkened. In the example illustrated in FIG. **3A** and FIG. **3B****,** a supplied water vapor concentration is set to 25 mol%. However, the supplied water vapor concentration is not limited to the above-mentioned numerical value and may be set to any appropriate numerical value. The end point of the dehydration step corresponding to a previous step is set as a starting point **S** of the stopping method for a separation device. In the embodiment shown in FIGS. **3****,** the temperature is set to 150°C and the total pressure is set to 1,000 kPaA at the starting point **S.** In the embodiment of the present invention, the temperature of the separation membrane is decreased under the environment in which the relationship of [P(H₂O)/P^{sat}(H₂O)≥0.001] is satisfied and the temperature is 100°C or higher as indicated by the arrow in FIG. **3A****.** Decreasing the temperature of the separation membrane under such an environment can suppress drying of the separation membrane and prevent various kinds of damage typically including a crack. In one embodiment, the temperature of the environment A is decreased by using output adjustment performed by temperature control means. Preferably, the temperature of the environment A is decreased by supplying a water-containing gas (for example, a water-containing air) that has been subjected to temperature control performed by the temperature control means, to the first flow path.

In the environment A, P(H₂O)/P^{sat}(H₂O) is preferably 0.005 or more, more preferably 0.05 or more. When the value falls within such ranges, the above-mentioned effects become pronounced. Further, a measurement device can be simplified. Further, a general-purpose product can be used as the measurement device, and hence costs can be reduced.

Further, in the environment A, P(H₂O)/P^{sat}(H₂O) is preferably less than 1 (for example, a value below the broken line in FIG. **3A****),** more preferably 0.95 or less, still more preferably 0.9 or less. When the value falls within such ranges, the effects of the invention of the present application can be stably obtained. When the environment A is placed under the above-mentioned conditions, damage on the separation membrane caused by droplets (for example, damage due to dissolution of the separation membrane) can be prevented.

In one embodiment, as shown in FIG. **3A****,** the stopping method for a separation device includes reducing the pressure in the environment A. In one embodiment, a pressurized environment (for example, an environment in which the pressure is from 0.1 MPaG to 20 MPaG) in the dehydration step corresponding to the previous step is subjected to pressure reduction in the stopping method for a separation device. The pressure reduction may be an operation involving a reduction in the amount of moisture in the environment A.

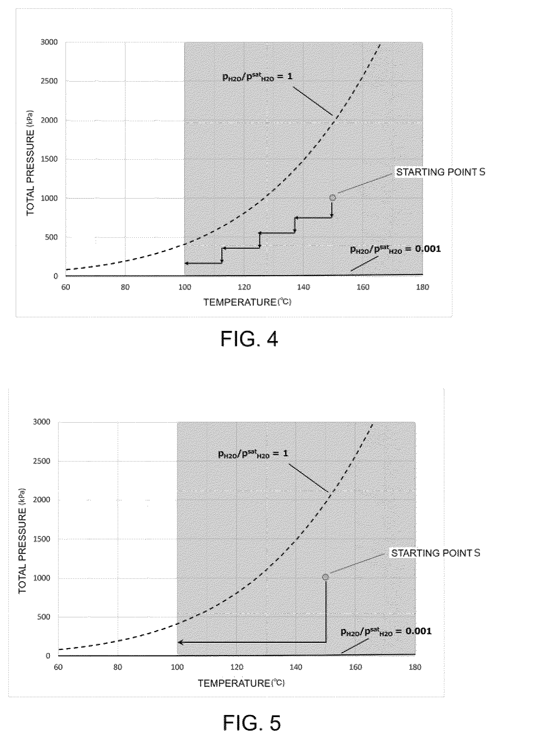

FIG. **4** and FIG. **5** are explanatory graphs for showing the stopping method for a separation device according to one embodiment of the present invention. In one embodiment, after the pressure in the environment A is reduced, the temperature is decreased. Preferably, as shown in FIG. **4** and FIG. **5****,** first, the pressure in the environment A is reduced at the starting point **S** of the stopping method. The pressure reduction may involve a decrease in temperature of the environment A. For example, the temperature is allowed to naturally drop along with the pressure reduction. In one embodiment, during the pressure reduction, the temperature of the environment A is set approximately constant (for example, a temperature variation within 5°C). According to this embodiment, damage on the separation membrane due to drying can be prevented, and the degree of certainty for the prevention of damage on the separation membrane caused by droplets can be remarkably increased.

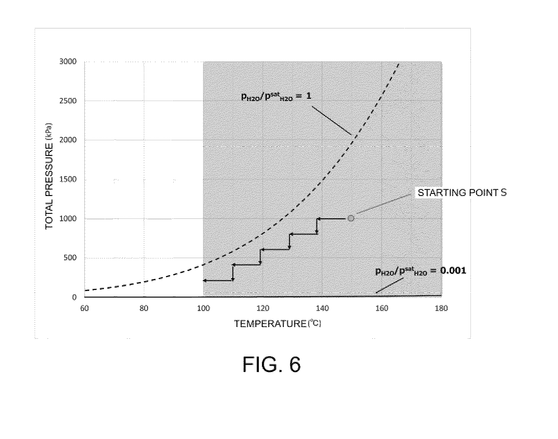

In one embodiment, after the temperature of the environment A is decreased, the pressure is reduced (FIG. **6****).** In one embodiment, first, the temperature of the environment A is decreased at the starting point **S** of the stopping method. In one embodiment, during the temperature decrease, the pressure in the environment A is set approximately constant (for example, a pressure variation within 50kPa). According to this embodiment, damage on the separation membrane due to drying can be prevented, and the degree of certainty for the prevention of damage on the separation membrane caused by droplets can be remarkably increased.

Preferably, also during the pressure reduction, in the environment A, the pressure is maintained to be larger than atmospheric pressure. In this manner, damage on the separation membrane due to drying can be prevented.

In one embodiment, during the pressure reduction, the temperature of the environment A is decreased by using output adjustment performed by the temperature control means. For example, in order to moderate a natural drop in temperature or achieve an approximately constant change in temperature during the pressure reduction, a heating device serving as the temperature control means is used. Examples of the heating device include a reactor involving a chemical reaction, a heater, and a heat exchanger. Further, a heating device used in the dehydration step corresponding to the previous step may also be used as the temperature control means.

In one embodiment, when the pressure in the environment A is reduced, a pressure-reduction operation is performed in a stepwise manner (FIG. **4** and FIG. **6****).** Herein, the phrase "the pressure-reduction operation is performed in a stepwise manner" means that a period from the start to the end of the stopping method for a separation device includes two or more (preferably five or more, more preferably twenty or more) periods in each of which the pressure (total pressure) in the environment A is approximately constant (for example, a pressure variation within 50 kPa). The upper limit of the number of periods in each of which the pressure (total pressure) in the environment A is approximately constant is, for example, one hundred fifty or less. When, for example, the pressure is reduced to from 3 MPa to 0.1 MPa, the pressure reduction operation is performed in fifty eight steps so that the period in which the pressure (total pressure) in the environment A is set approximately constant appears each time the pressure is reduced by 50 kPa. The stepwise pressure reduction operation can prevent damage on the separation membrane. In one embodiment, the number of periods in each of which the pressure (total pressure) in the environment A is approximately constant is set to ten or less.

In one embodiment, the stopping method for a separation device includes setting the total pressure in the environment A approximately constant (for example, a pressure variation within 50 kPa) while the temperature of the environment A is being decreased (FIG. **4** to FIG. **6****).**

Preferably, the pressure reduction operation is stopped at the time when the total pressure in the environment A becomes equal to atmospheric pressure+10 kPa (preferably, +50 kPa) in the stopping method for a separation device. After the total pressure in the environment A becomes equal to atmospheric pressure+10 kPa (preferably, +50 kPa), the temperature of the separation membrane is set to be less than 100°C. In this manner, the separation device can be stopped while damage on the separation membrane is prevented. In another embodiment, the pressure reduction operation is stopped at the time when the total pressure in the environment A becomes equal to atmospheric pressure.

### B. Separation Device

### B-1. Separation Membrane Complex

As illustrated in FIG. **1****,** the separation device **1** typically includes the separation membrane complex **10** including: the substrate **3;** and the separation membrane **2.** Although not shown, the separation membrane complex **10** is housed in any appropriate case for use. The separation membrane complex **10** typically extends in the same direction as the direction in which the first flow path extends. The length of the separation membrane complex **10** may be appropriately and suitably adjusted.

### B-1-1. Substrate

The substrate **3** supports the separation membrane **2.** In one embodiment, the substrate **3** is a porous substrate. The porous substrate has, for example, a monolith-type structure including: a framework being continuous in a three-dimensional network pattern; and communication holes defined by the framework.

The porous substrate may be formed of any appropriate material. Typical examples of a material for the porous substrate include a ceramic sintered compact. Examples of the ceramic sintered compact include alumina, silica, mullite, zirconia, titania, yttria, silicon nitride, silicon carbide, and cordierite. The ceramic sintered compacts can be used alone or in combination. A preferred one of the ceramic sintered compacts is alumina.

The porous substrate may contain an inorganic binding material. Examples of the inorganic binding material include titania, mullite, easily sinterable alumina, silica, glass frit, clay mineral, and easily sinterable cordierite. The inorganic binding materials can be used alone or in combination.

The porous substrate may be made up of a single layer or may have a multilayer structure in which multiple layers are stacked. In one embodiment, as illustrated in FIG. **2****,** the porous substrate has a multilayer structure including a plurality of layers being different in pore diameter. In this case, it is preferred that the pore diameter of the layer closer to the separation membrane **2** be smaller.

The average pore diameter of the porous substrate is, for example, from 0.01 µm to 70 µm, preferably from 0.05 µm to 25 µm. The average pore diameter of the porous substrate on the separation membrane side is from 0.01 µm to 1 µm, preferably from 0.05 µm to 0.5 µm. With regard to the distribution of the pore diameters in the whole including the surface and inside of the porous substrate, D5 is, for example, from 0.01 µm to 50 µm, D50 is, for example, from 0.05 µm to 70 µm, and D95 is, for example, from 0.1 µm to 2,000 µm. The porosity of the porous substrate on the separation membrane side is, for example, from 25% to 50%. The average pore diameter of the porous substrate may be measured with, for example, a mercury porosimeter, a perm porometer, or a nano-perm porometer.

As illustrated in FIG. **1****,** the substrate **3** typically separates the first flow path **21** and the second flow path **22** from each other. The substrate **3** may have any appropriate shape. Examples of the shape of the substrate **3** include a cylindrical shape, a honeycomb shape, and a plate-like shape.

In one embodiment, the substrate **3** is a cylindrical substrate **3a.** Examples of the sectional shape of the cylindrical substrate **3a** in the direction orthogonal to the length direction of the cylindrical substrate **3a** include a triangular shape, a rectangular shape, a pentagonal shape, a polygonal shape having six or more sides, a circular shape, and an elliptical shape, and a preferred one is a circular shape. The outer diameter and the length of the cylindrical substrate may be appropriately set in accordance with its purpose.

In this embodiment, the internal space of the cylindrical substrate **3a** (space defined by the inner peripheral surface of the cylindrical substrate) includes any one of the first flow path **21** or the second flow path **22,** and the external space of the cylindrical substrate **3a** (space outside the outer peripheral surface of the cylindrical substrate) includes another one of the first flow path **21** or the second flow path **22.** In the illustrated example, the internal space of the cylindrical substrate **3a** includes the first flow path **21,** and the external space of the cylindrical substrate **3a** includes the second flow path **22.**

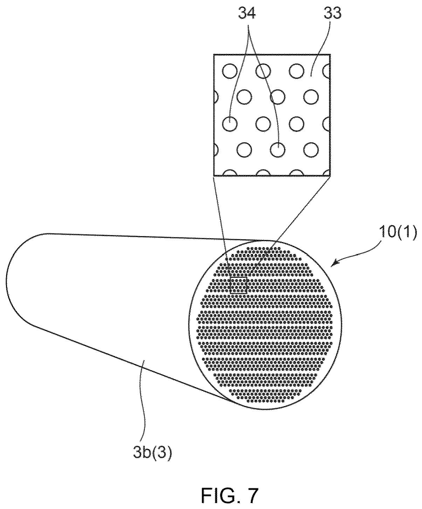

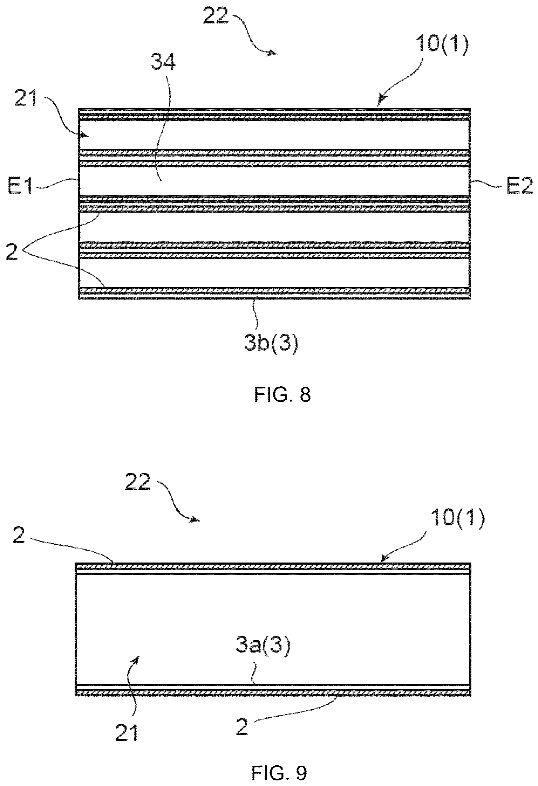

In another embodiment, as illustrated in FIG. **7** and FIG. **8****,** the substrate **3** is a honeycomb-shaped substrate **3b.** The honeycomb-shaped substrate **3b** includes a partition wall **33** that defines a plurality of cells **34.** The cells **34** are each formed in a cylindrical shape so as to penetrate the honeycomb-shaped substrate **3b** in its longitudinal direction.

The cells **34** extend from a first end surface **E1** (inflow end surface) to a second end surface **E2** (outflow end surface) of the honeycomb-shaped substrate **3b** in the longitudinal direction (axial direction) of the honeycomb-shaped substrate **3b** (see FIG. **7****).** The cells **34** each have any appropriate shape in cross section taken in the direction orthogonal to the length direction of the honeycomb-shaped substrate **3b.** Examples of the sectional shape of the cell include a triangular shape, a rectangular shape, a pentagonal shape, a polygonal shape having six or more sides, a circular shape, and an elliptical shape. The sectional shape and the size of the cell may be the same for all the cells or may be different for at least some of the cells. A preferred one of the above-mentioned sectional shapes of the cell is a circular shape.

The distance between the central axes of the plurality of cells **34** is, for example, from 0.3 mm to 20 mm. A cell density (that is, the number of cells **34** per unit area) in cross section taken in the direction orthogonal to the length direction of the honeycomb-shaped substrate may be appropriately set in accordance with its purpose. The cell density may be, for example, from 0.5 cell/cm² to 320 cells/cm². When the cell density falls within such a range, sufficient strength and effective geometric surface area (GSA) of the honeycomb-shaped substrate can be ensured.

The honeycomb-shaped substrate **3b** has any appropriate shape (overall shape). Examples of the honeycomb-shaped substrate include a columnar shape with a circular bottom surface, an elliptical cylindrical shape with an elliptical bottom surface, a prism shape with a polygonal bottom surface, and a pillar shape with an indefinite bottom surface. The honeycomb-shaped substrate **3b** of the illustrated example has a columnar shape. The outer diameter and the length of the honeycomb-shaped substrate may be appropriately set in accordance with its purpose.

In this embodiment, the internal space of each of the plurality of cells **34** (space defined by the inner peripheral surface of the cell) includes any one of the first flow path **21** or the second flow path **22,** and the external space of the honeycomb-shaped substrate **3b** (space outside the outer peripheral surface of the honeycomb-shaped substrate) includes another one of the first flow path **21** or the second flow path **22.** In the illustrated example, the internal space of the cell **34** includes the first flow path **21,** and the external space of the honeycomb-shaped substrate **3b** includes the second flow path **22.**

### B-1-2. Separation Membrane

The separation membrane **2** is typically directly provided on the surface of the substrate **3.** The separation membrane **2** may face the first flow path **21** (see FIG. **1** and FIG. **8****)** or may face the second flow path **22** (see FIG. **9****).** When the separation membrane faces the first flow path, a substance to be separated, which is contained in a mixture passing through the first flow path, comes into direct contact with the separation membrane. Thus, the separation membrane can efficiently separate the substance to be separated. When the separation membrane faces the second flow path, the substance to be separated, which is contained in the mixture passing through the first flow path, permeates through the substrate to reach the separation membrane. Also with this arrangement, the separation membrane can separate the substance to be separated.

In one embodiment, the separation membrane **2** faces the first flow path **21.**

In FIG. **1****,** the substrate **3** is the cylindrical substrate **3a.** The separation membrane **2** is formed on the inner surface of the cylindrical substrate **3a.** In the illustrated example, the first flow path **21** is defined in a portion (typically, the central portion) of the separation membrane complex **10,** in which the separation membrane **2** is absent, in cross section.

Further, in FIG. **8****,** the substrate **3** is the honeycomb-shaped substrate **3b.** The separation membrane **2** is formed on the inner surface of each of the plurality of cells **34.** The first flow path **21** is defined in a portion (typically, the central portion) of the cell **34,** in which the separation membrane **2** is absent, in cross section.

As in the illustrated example, the separation membrane **2** may be formed entirely on the inner surface of the cylindrical substrate **3a** or the inner surface of the cell **34** (that is, so as to surround the first flow path **21)** or may be formed partially on the inner surface of the cylindrical substrate **3a** or the inner surface of the cell **34.** The separation membrane that is formed so as to surround the first flow path can improve separation efficiency for the substance to be separated.

The separation membrane **2** typically has fine pores. The separation membrane **2** separates a mixture into a separated substance and a non-separated substance by, for example, a so-called molecular sieve effect that the separation characteristic of a specific substance is controlled depending on a molecular size and the pore diameter of the separation membrane.

The separation membrane **2** may be formed of any appropriate material. Examples of the material for the separation membrane **2** include zeolite, silica, and carbon. The materials for the separation membrane **2** can be used alone or in combination.

When the substance to be separated contains water, a preferred example of the material for the separation membrane **2** is zeolite. In one embodiment, the separation membrane **2** is a zeolite membrane.

The zeolite membrane includes a membrane formed from zeolite on the surface of the substrate. The zeolite membrane may contain two or more kinds of zeolites different from each other in structure or composition.

Examples of the zeolite for forming the zeolite membrane include: zeolite in which an atom (T atom) positioned on the center of an oxygen tetrahedron (TO₄) for forming the zeolite is formed of only Si, or Si and Al; AlPO-type zeolite in which the T atom is formed of Al and P; SAPO-type zeolite in which the T atom is formed of Si, Al, and P; MAPSO-type zeolite in which the T atom is formed of magnesium (Mg), Si, Al, and P; and ZnAPSO-type zeolite in which the T atom is formed of zinc (Zn), Si, Al, and P. Part of the T atom may be substituted with any other element.

Examples of the zeolite include AEI-type, AEN-type, AFN-type, AFV-type, AFX-type, BEA-type, CHA-type, DDR-type, ERI-type, ETL-type, FAU-type (X-type or Y-type), GIS-type, LEV-type, LTA-type, MEL-type, MFI-type, MOR-type, PAU-type, RHO-type, SAT-type, and SOD-type zeolites. Of those zeolites, a LTA-type zeolite is preferred.

The maximum number of ring members of the zeolite is, for example, 12 or less, preferably 10 or less, more preferably 8 or less, and is, for example, 6 or more.

The zeolite film contains SiO₂ and Al₂O₃. The zeolite film may further contain an alkali metal. The alkali metal is, for example, sodium (Na) or potassium (K).

The molar ratio "SiO₂/Al₂O₃" in the zeolite film is, for example, 100 or less, preferably 10 or less, more preferably less than 5, still more preferably 4 or less. When the molar ratio "SiO₂/Al₂O₃" in the zeolite film is equal to or less than the above-mentioned upper limits, breakage of the zeolite film can be further stably suppressed. The lower limit of the molar ratio "SiO₂/Al₂O₃" in the zeolite film is typically 2. The molar ratio "SiO₂/Al₂O₃" may be measured by, for example, scanning electron microscopy-energy-dispersive X-ray spectroscopy (SEM-EDX; X-ray accelerating voltage: 10 kV).

The average pore diameter of the separation membrane **2** can be appropriately and suitably selected in accordance with the substance to be separated. The average pore diameter of the separation membrane **2** is, for example, from 0.2 nm to 1 nm, preferably from 0.3 nm to 0.5 nm. A separation membrane **2** having a smaller average pore diameter has higher selectivity. The average pore diameter of the separation membrane **2** is smaller than the average pore diameter of the substrate **3.** When the separation membrane **2** is a zeolite membrane, the arithmetic average of the short diameter and long diameter of an n-membered ring pore, where "n" represents the maximum number of members in the ring of the zeolite, is adopted as the average pore diameter. The term "n-membered ring pore" refers to such a pore that the number of oxygen atoms in a portion in which the oxygen atom are bonded to T atoms to form a ring structure is "n". When the zeolite has a plurality of n-membered ring pores equal to each other in "n", the arithmetic average of the short diameters and long diameters of all the n-membered ring pores is adopted as the average pore diameter of the zeolite. The average pore diameter of the zeolite membrane is determined by the framework structure of the zeolite and may be obtained from a value disclosed in the "Database of Zeolite Structures" of the International Zeolite Association, [online], from the Internet <URL: http://www.iza-structure.org/databases/>.

The thickness of the separation membrane **2** is, for example, from 0.05 µm to 30 µm, preferably from 0.1 µm to 20 µm, more preferably from 0.5 µm to 10 µm. A thicker separation membrane has higher selectivity. A thinner separation membrane increases a permeation rate.

The surface roughness (Ra) of the separation membrane **2** is, for example, 5 µm or less, preferably 2 µm or less, more preferably 1 µm or less, still more preferably 0.5 µm or less. The surface roughness (Ra) can be measured, for example, in conformity with JIS B 0601.

The separation membrane **2** may be formed by any appropriate method in accordance with a material for forming the membrane. For example, the zeolite membrane may be obtained by: applying zeolite serving as a seed crystal onto a separation membrane; immersing the substrate to which the seed crystal has adhered in a starting material solution; and growing zeolite from the seed crystal serving as a nucleus through hydrothermal synthesis. The starting material solution contains, for example, a silica source, an alumina source, organic matter, an alkali source, or water. A heating temperature in the hydrothermal synthesis is set to, for example, from 60°C to 200°C. A heating time is set to, for example, from 1 hour to 240 hours. In addition, the separation membrane may be formed by using a starting material slurry obtained by mixing an organic binder, a ceramic starting material, and a solvent.

### B-2. Supply Unit, First Recovery Unit, and Second Recovery Unit

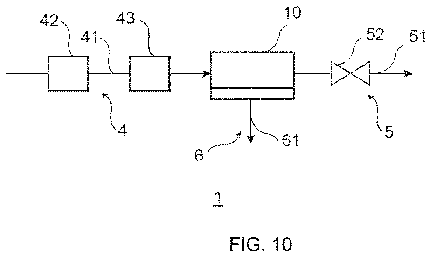

In one embodiment, as illustrated in FIG. **10****,** the separation device **1** includes, in addition to the separation membrane complex **10:** a supply unit **4** that supplies a mixture to the first flow path **21** of the separation membrane complex **10;** a first recovery unit **5** that recovers a fluid having passed through the first flow path **21;** and a second recovery unit **6** that recovers a permeate substance that has permeated through the separation membrane **2.** The separation device **1** of the illustrated example is configured so as to be capable of adjusting the temperature, the pressure, and the flow rate of the mixture passing through the first flow path. FIG. **10** is an explanatory diagram for illustrating one embodiment of the present invention, and the present invention is not limited to this embodiment.

The supply unit **4** of the illustrated example can adjust the temperature and the flow rate of the mixture supplied to (flowing into) the first flow path **21.** The supply unit **4** includes a supply line **41,** a heating device **42,** and a flow rate adjuster **43.**

The supply line **41** is a pipe for supplying the mixture to the first flow path **21.** The upstream end portion of the supply line **41** in the direction of supply of the mixture is connected to, for example, a storage tank that stores the mixture, although not shown. The downstream end portion of the supply line **41** in the direction of supply of the mixture is connected to the inflow port of the first flow path **21** of the separation membrane complex **10** (see FIG. **1****).**

The heating device **42** is provided to the supply line **41** and can heat the mixture passing through the supply line **41.** The heating device **42** can have any appropriate configuration.

The flow rate adjuster **43** can adjust the flow rate of the mixture passing through the supply line **41.** The flow rate adjuster **43** can have any appropriate configuration. In the illustrated example, the flow rate adjuster **43** is provided between the heating device **42** and the separation membrane complex **10** in the supply line **41.**

The supply unit **4** may include other devices as required. For example, other devices may be provided between the flow rate adjuster **43** and the separation membrane complex **10** in the supply line **41.**

The first recovery unit **5** of the illustrated example can adjust the pressure in the first flow path **21.** The first recovery unit **5** includes a first recovery line **51** and a pressure adjustment valve **52.**

The first recovery line **51** is a pipe through which a fluid (mixture in which the substance to be separated has been reduced) that has passed through the first flow path **21** of the separation membrane complex **10** is allowed to pass. The upstream end portion of the first recovery line **51** in the direction of passage of the fluid is connected to the outflow port of the first flow path **21** of the separation membrane complex **10** (see FIG. **1****).** The downstream end portion of the first recovery line **51** in the direction of passage of the fluid is connected to, for example, a storage tank, although not shown.

The pressure adjustment valve **52** is provided to the first recovery line **51.** The pressure adjustment valve **52** can adjust the opening degree of the first recovery line **51,** and in turn, can adjust the pressure in the first flow path **21.**

The temperature of the environment A may be a temperature at the outlet of the separation membrane (separation membrane complex **10).** When the pressure adjustment valve **52** is provided, the temperature of the environment A can be measured between the outlet of the separation membrane (separation membrane complex **10)** and the pressure adjustment valve **52.** Further, in a case in which the separation membrane is arranged in series, when a heating device is further arranged on the downstream side of the separation membrane (separation membrane complex **10),** the temperature of the environment A can be measured on the upstream side of the heating device. The temperature may be a pipe surface temperature.

The second recovery unit **6** of the illustrated example includes a second recovery line **61.**

The second recovery line **61** is a pipe through which a fluid (fluid containing at least a permeate substance) that has passed through the second flow path **22** is allowed to pass from the second flow path **22** of the separation membrane complex **10.** The upstream end portion of the second recovery line **61** in the direction of passage of the fluid is connected to the outflow port of the second flow path **22** of the separation membrane complex **10.** The downstream end portion of the second recovery line **61** in the direction of passage of the fluid is connected to, for example, a storage tank, although not shown.

In the embodiment described above, the supply unit **4** on the upstream side with respect to the separation membrane complex **10** adjusts the temperature and the flow rate of the mixture supplied to (flowing into) the first flow path **21,** and the first recovery unit **5** on the downstream side with respect to the separation membrane complex **10** adjusts the pressure on the mixture in the first flow path **21.** However, the configuration of the separation device **1** is not limited to that described above. The supply unit **4** may be configured so as to be capable of adjusting the pressure on the mixture in the first flow path **21.** Further, the first recovery unit **5** may be configured so as to be capable of adjusting the flow rate of the mixture passing through the first flow path **21.**

### Industrial Applicability

The stopping method for a separation device according to the embodiment of the present invention is used for the separation of a specific substance in a mixture, in particular, suitably used for the separation of water from a water-containing mixture.

### Reference Signs List

- **1**: separation device

- **2**: separation membrane
- **3**: substrate
- **21**: first flow path
- **22**: second flow path

## Claims

1. A stopping method for a separation device, which is to be performed after a dehydration step using a separation membrane, the separation device including the separation membrane, the stopping method comprising:
placing the separation membrane under an environment A in which a water vapor partial pressure P(H₂O) and a saturation water vapor pressure P^{sat}(H₂O) satisfy a relationship of [P(H₂O)/P^{sat}(H₂O)≥0.001] and a temperature is 100°C or higher; and
decreasing a temperature of the environment A.

2. The stopping method for a separation device according to claim 1, further comprising reducing a pressure in the environment A.

3. The stopping method for a separation device according to claim 2, further comprising decreasing the temperature of the environment A after the pressure is reduced.

4. The stopping method for a separation device according to claim 3, wherein the temperature is decreased by using output adjustment performed by temperature control means.

5. The stopping method for a separation device according to any one of claims 2 to 4, wherein the temperature of the environment A is set approximately constant while the pressure is being reduced.

6. The stopping method for a separation device according to claim 5, wherein a pressure reduction operation is performed in a stepwise manner.

7. The stopping method for a separation device according to claim 1 or 2, wherein a total pressure in the environment A is set approximately constant while the temperature of the environment A is being decreased.

8. The stopping method for a separation device according to claim 1 or 2, wherein the temperature of the environment A is less than 400°C.

9. The stopping method for a separation device according to claim 1 or 2, wherein, in the environment A, the water vapor partial pressure P(H₂O) and the saturation water vapor pressure P^{sat}(H₂O) satisfy a relationship of [1>P(H₂O)/P^{sat}(H₂O)].

10. The stopping method for a separation device according to claim 2, wherein a pressure reduction operation is stopped at the time when a total pressure in the environment A becomes equal to atmospheric pressure+10 kPa.

11. The stopping method for a separation device according to claim 1 or 2, wherein the separation membrane is a zeolite membrane.

12. The stopping method for a separation device according to claim 11, wherein the zeolite membrane is made of LTA-type zeolite.
